# EUROPÄISCHE PATENTSCHRIFT

(11) **EP 4 136 416 B1**
(45) Veröffentlichungstag und Bekanntmachung des Hinweises auf die Patenterteilung: **29.10.2025**
(21) Anmeldenummer: 20775025.8
(22) Anmeldetag: 24.09.2020
(51) Int. Cl.: G01F 23/284

(54) **SENSORANORDNUNG MIT AUSRICHTEVORRICHTUNG**
SENSOR ASSEMBLY WITH ALIGNMENT DEVICE
ENSEMBLE CAPTEUR AVEC DISPOSITIF D'ALIGNEMENT

(30) Priorität: 15.04.2020 WO PCT/EP2020/060614; 15.04.2020 WO PCT/EP2020/060615
(43) Veröffentlichungstag der Anmeldung: 22.02.2023
(73) Patentinhaber: VEGA Grieshaber KG, 77709 Wolfach (DE)
(72) Erfinder: HENGSTLER, Clemens, 77716 Haslach (DE)
(74) Vertreter: Maiwald GmbH
(86) Internationale Anmeldenummer: PCT/EP2020/076787
(87) Internationale Veröffentlichungsnummer: WO 2021/209162

(56) Entgegenhaltungen:
- JP-A- S63 210 733
- US-A1- 2015 048 963
- US-A1- 2018 335 332
- US-A1- 2019 353 514
- US-B2- 9 404 787

## Beschreibung

Die vorliegende Anmeldung beansprucht die Prioritäten der internationalen Patentanmeldungen Nr. PCT/EP2020/060614, eingereicht am 15. April 2020 und PCT/EP2020/060615, eingereicht am 15. April 2020.

### GEBIET DER ERFINDUNG

Die Erfindung betrifft Sensoranordnungen zum Einsatz im industriellen Umfeld. Insbesondere betrifft die Erfindung eine Sensoranordnung zur Füllstand- oder Grenzstandmessung eines Füllguts oder eines Schüttguts in einem Behälter, ein Sensorgehäuse mit einer Ausrichtevorrichtung zur Montage und zum Ausrichten einer Sensoranordnung an einem Behälter, die Verwendung einer Sensoranordnung zur Füllstand- oder Grenzstandmessung eines Füllguts oder eines Schüttguts in einem Behälter und die Verwendung eines Sensorgehäuses mit einer Ausrichtevorrichtung zur Montage und zum Ausrichten einer Sensoranordnung an einem Behälter.

### HINTERGRUND DER ERFINDUNG

Messsensoren werden häufig im industriellen Umfeld beispielsweise zur Füllstandmessung, Grenzstandmessung, Durchflussmessung, Druckmessung, Pegel- oder Strömungsgeschwindigkeitsmessung oder Temperaturmessung eingesetzt. Eine sichere Montage derartiger Sensoren an den zu messenden Behältern ist für die zuverlässige Messung von großer Bedeutung, insbesondere wenn ein Deckel eines Behälters, wie z.B. eines GFK (Glasfaser-verstärkten Kunststoff) - Silos, in einer Prozessanlage mit einer schräg oder unregelmäßig ausgebildeten Außenkontur versehen sind. US 2015/048963 A1 beschreibt eine Radar-Strahlablenkungseinheit für ein Füllstandradar zum gesteuerten Ablenken einer Hauptabstrahlrichtung eines Sendesignals des Füllstandradars, die ein erstes Strahlablenkungselement zum Ablenken der Hauptabstrahlrichtung des Sendesignals und einen ersten Antrieb zum Rotieren des ersten Strahlablenkungselements um eine erste Rotationsachse aufweist, so dass die Hauptabstrahlrichtung des Sendesignals nach Durchlaufen des ersten Strahlablenkungselements auf einer geschlossenen Bahn umläuft. US 9 404 787 B2 beschreibt ein Füllstandmessgerät mit einer integrierbaren Linsenantenne, welches ein Radar-Füllstandmessgerät, das ein Signalübertragungsende und eine Hornantenne am Signalübertragungsende aufweist, eine Linsenantennenbaugruppe, die um die Hornantenne herum montiert ist und ein hohles Gehäuse zum Aufnehmen der Hornantenne mit zwei Enden aufweist, eine in einem der Enden des Gehäuses ausgebildete Aussparung mit einer Innenwand, die in das Signal-Transceiver-Ende eingreift, eine Kopplungsabschnitt, der an einer Peripherie des Gehäuses ausgebildet ist, eine Linsenantenne, die am anderen Ende des Gehäuses ausgebildet ist, und eine Winkeleinstellbaugruppe, die mit dem Kopplungsabschnitt des Gehäuses der Linsenantennenbaugruppe verbunden ist, umfasst.

### ZUSAMMENFASSUNG DER ERFINDUNG

Es ist eine Aufgabe der Erfindung, einen Messsensor mit flexibler Einsatzbarkeit und hoher Zuverlässigkeit für diverse Prozessbehälter in einer Prozessanlage anzugeben.

Die Aufgabe wird durch die Merkmale der unabhängigen Patentansprüche gelöst. Weiterbildungen der Erfindung ergeben sich aus den Unteransprüchen und der folgenden Beschreibung.

Ein Aspekt der vorliegenden Offenbarung betrifft eine Sensoranordnung zur Füllstand- oder Grenzstandmessung eines Füllguts oder eines Schüttguts in einem Behälter. Die Sensoranordnung weist einen Sensor mit einer Antenne, ein Sensorgehäuse mit einer Ausrichtevorrichtung auf. Die Ausrichtevorrichtung des Sensorgehäuses weist einen ersten Abschnitt und einen zweiten Abschnitt auf, der zur Aufnahme der Antenne eingerichtet ist. Der erste Abschnitt und der zweite Abschnitt sind derart ausgebildet, um gegeneinander drehbar zu sein. Die Ausrichtevorrichtung ist eingerichtet, durch das Drehen des ersten Abschnitts und/oder des zweiten Abschnitts die Abstrahlrichtung des Messsignals des Sensors zu ändern. Die Sensoranordnung ist dazu eingerichtet, mittels des ersten Abschnitts des Sensorgehäuses an der Außenseite des Behälterdachs angebracht zu sein. Das Sensorgehäuse weist einen dritten Abschnitt mit einem dritten Hohlraum auf, der zwischen dem ersten Abschnitt und dem zweiten Abschnitt angeordnet ist und derart ausgebildet ist, um jeweils gegenüber dem ersten Abschnitt und/oder dem zweiten Abschnitt drehbar zu sein.

Der Sensor der Sensoranordnung kann ein Radarsensor sein und als ein berührungslos messender Sensor zum Abstrahlen und Empfangen eines elektromagnetischen Messsignals oder Messstrahls eingerichtet sein.

Die Sensoranordnung kann außerhalb einem Prozessbehälter oder auf der Außenseite eines Behälterdachs angebracht oder angeordnet sein, auch wenn das Behälterdach schräg, teilweise schräg, beispielsweise kegelförmig, klöpperförmig ausgebildet ist. Der Sensor kann bei der Montage auf einem schrägen Behälterdach senkrecht nach unten oder in Richtung des Füllguts oder des Schüttguts in dem Behälter ausgerichtet sein. Der Sensor kann beispielsweise zur Füllstands- oder Grenzstandmessung durch das Behälterdach hindurch eingerichtet sein.

Der erste Abschnitt und der zweite Abschnitt bilden die Ausrichtevorrichtung derart, dass sich der erste Abschnitt und der zweite Abschnitt der Ausrichtevorrichtung gegeneinander drehen oder schwenken können und somit das Ausrichten der von dem zweiten Abschnitt aufgenommenen Antenne ändern können.

Der erste Abschnitt des Sensorgehäuses ist unterhalb des zweiten Abschnitts des Sensorgehäuses angeordnet. Somit kann jeweils der erste Abschnitt als ein unterer Teil und der zweite Abschnitt als ein oberer Teil des Sensorgehäuses ausgeführt sein. Der erste Abschnitt und der zweite Abschnitt können unmittelbar oder mittelbar verbunden sein.

Erfindungsgemäß ist der erste Abschnitt in der unmittelbaren Nähe des Behälters bzw. auf der Außenseite des Behälterdachs angebracht. Somit kann der zweite Abschnitt über den ersten Abschnitt an dem Behälter montiert und die Sensoranordnung durch den unteren ersten Abschnitt an dem Behälter fixiert werden.

Der Behälter kann ein Kunststoffbehälter oder ein GFK-Behälter sein.

Beispielsweise kann der Sensor mittels des Sensorgehäuses bzw. der Ausrichtevorrichtung außen auf dem Behälter aufgeklebt werden, um das Füllgut oder das Schüttgut in dem Behälter zu messen. Die Klebemontage kann vorteilhaft das leichte und schnelle Einsetzen des Messsensors ermöglichen. Die Sensoranordnung kann derart optimiert sein, dass das Messsignal oder der Messstrahl immer durch die gleichen Materialien des Behälters und/oder des Sensorgehäuses mit gleichen Materialstärken hindurch abgestrahlt und dadurch nicht abgelenkt oder verformt werden kann. Daraus kann sich eine zuverlässige Messung mit der Sensoranordnung ergeben. Die Drehbarkeit des ersten Abschnitts und des zweiten Abschnitts des Sensorgehäuses kann vorteilhaft ermöglichen, dass sich die Antenne bzw. das Messsignal auch bei der Montage auf einen schrägen Behälterdach in eine bestimmte Ausrichtung zum dem Füllgut, beispielsweise in eine vertikale Ausrichtung oder senkrecht zu der Oberfläche des Füllguts ausrichten kann. Das Drehen kann manuell oder automatisch gesteuert werden.

Die Änderung des Ausrichtens der Antenne und der Abstrahlrichtung des Messsignals mittels der Ausrichtevorrichtung kann vorteilhaft ein ungestörtes oder unverhindertes Messsignal auch bei der schrägen Montage ermöglichen und somit eine zuverlässige Füllstand-, Grenzstand- oder Topologiebestimmung eines Füllguts oder eines Schüttguts in dem Behälter absichern.

Die Abstrahlrichtung kann bezogen auf die untere Fläche geändert werden. Es kann auch vorgesehen sein, dass sich durch das Drehen alternativ oder zusätzlich zu der Abstrahlrichtung die Montagerichtung oder der Montagewinkel ändern kann.

Der Radarsensor kann zur Prozessautomatisierung im industriellen Umfeld ausgeführt sein. Er kann in der Landwirtschaft eingesetzt werden, beispielsweise zur Überwachung von mobilen Trinkwasser- oder Futterbehältern. Beispielsweise kann der Radarsensor im Fabrikautomatisierungsbereich oder für die Gebäudeautomation eingesetzt werden.

Alternativ oder zusätzlich kann der Radarsensor in Privathaushalten, wie z.B. für eine klassische Installation auf einem GFK-Heizöltank oder einer Regenwasser-Zisterne eingesetzt werden.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage beispielsweise in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation von Anlagen und die Logistikautomation von Lieferketten. Mit Hilfe von Distanz- und Winkelsensoren werden beispielsweise im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Gemäß einer Ausführungsform weist der erste Abschnitt einen ersten Hohlraum und der zweite Abschnitt einen zweiten Hohlraum auf, in dem die Antenne angeordnet ist.

Der erste Hohlraum und der zweite Hohlraum können einen gemeinsamen Hohlraum bilden. Alternativ können der erste Hohlraum und der zweite Hohlraum jeweils als ein separat geschlossener Hohlraum ausgebildet sein.

Die Antenne des Sensors kann in dem zweiten Hohlraum des zweiten Abschnitts derart angeordnet sein und eingerichtet sein, das Messsignal oder den Messstrahl von dem Sensor über den ersten Abschnitt bzw. über den ersten Hohlraum durch das Sensorgehäuse und/oder das Behälterdach hindurch auszustrahlen und das von dem Füllgut oder Schüttgut reflektierte Messsignal zu empfangen.

Die Ausrichtevorrichtung kann so gestaltet sein, dass die Hohlräume des Sensorgehäuses eine hohe Schutzart aufweisen. Der erste Hohlraum und der zweite Hohlraum können beispielsweise jeweils im Inneren des ersten Abschnitts und des zweiten Abschnitts Luft oder Vakuum aufweisen, um Einflüsse auf die Messergebnisse, die von einer Strahlablenkung des Messsignals beim Durchlaufen durch die Ausrichtevorrichtung verursacht werden können, zu eliminieren oder zumindest zu minimieren.

Die Antenne der Sensoranordnung kann beispielsweise eine Hornantenne oder eine Parabolantenne oder eine Linsenantenne sein. Alternativ kann die Antenne eine Arrayantenne sein, mit der die Sensoranordnung auch zum Erfassen der Topologie des Füllguts oder des Schüttguts eingerichtet sein kann.

Die Sensoranordnung kann weiterhin eine Elektronik, beispielsweise mit einer Platine, aufweisen, mit der die Antenne verbunden sein kann. Die Elektronik kann eine Platine aufweisen und in dem zweiten Hohlraum des zweiten Abschnitts der Ausrichtevorrichtung bzw. des Sensorgehäuses angeordnet sein.

Gemäß einer weiteren Ausführungsform ist die Antenne außermittig oder mittig in dem zweiten Abschnitt des Sensorgehäuses angeordnet.

Durch das außermittige Anordnen der Antenne in dem zweiten Abschnitt kann die Höhe oder die Position der Antenne und/oder die Ausrichtung des Messsignals von der Antenne nach der Montage an dem Behälter durch das Drehen des ersten Abschnitts und/oder des zweiten Abschnitts gegenüber einander geändert werden.

Für eine weitere Ausführungsform könnte weißt der obere drehbare Teil des Gehäuses ein Display und oder Tasten auf. So kann erst der Sensor auf die Messaufgabe (Winkel) eingestellt werden und dann das Display zur besseren Ablesbarkeit für einen Nutzer die Richtige Position gedreht werden.

Gemäß einer weiteren Ausführungsform weist die Sensoranordnung weiterhin eine Polarisationseinrichtung auf, die eingerichtet ist, durch das Drehen des ersten Abschnitts und/oder des zweiten Abschnitts die Polarisation des Messsignals zu ändern.

Die Polarisationseinrichtung kann in dem ersten Abschnitt des Sensorgehäuses vorgesehen sein. Alternativ oder zusätzlich kann die Polarisationseinrichtung zwischen dem ersten Abschnitt und dem zweiten Abschnitt oder zwischen dem ersten Abschnitt und dem Behälterdach vorgesehen sein.

Das Vorsehen der Polarisationseinrichtung kann vorteilhaft die Ausrichtung des Messsignals des Sensors durch die Änderung der Polarisationseinrichtung ändern, insbesondere wenn die Antenne mittig in dem zweiten Abschnitt des Sensorgehäuses angeordnet ist und das Ausrichten oder die Position der Antenne nach der Montage nicht durch das Drehen des ersten Abschnitts und/oder des zweiten Abschnitts nicht oder nur geändert werden kann.

Gemäß einer weiteren Ausführungsform ist das Sensorgehäuse vollständig geschlossen und/oder lässt sich nicht zerstörungsfrei öffnen.

Alternative kann das Sensorgehäuse nicht vollständig geschlossen sein und beispielsweise eine Öffnung im ersten Abschnitt aufweisen, die bei der Montage durch das Behälterdach verschlossen sein. Somit kann der Messstrahl nur durch das Behälterdach hindurch abgestrahlt werden und die Störeinflüsse können somit weiter reduziert werden.

Das geschlossene Sensorgehäuse kann dazu dienen, dass den Sensor bzw. die Hohlräume der Sensoranordnung beispielsweise bei Anwendungen im Freien oder sehr schmutzigen oder staubigen Atmosphäre vor der Verschmutzung oder Umwelteinflüssen zu schützen.

Gemäß einer weiteren Ausführungsform ist der Sensor als ein autarker Radarsensor (AuRa-Sensor) ausgeführt ist.

Bei der autarken Anzeigeeinrichtung handelt es sich um eine Anzeigeeinrichtung, die die Energie, die zum Betrieb der Anzeigeeinrichtung benötigt wird, nicht drahtgebunden von einer externen Energiequelle, sondern von einer internen Energiequelle beziehen kann. Der autarke Radarsensor kann eine interne Energieversorgung, beispielsweise in Form einer Batterie oder einen Akku, aufweisen. Die Energieversorgung kann induktiv von außen oder mittels Energie-Harvesting kabellos geladen werden.

Zusätzlich kann der Radarsensor eine Funkschnittstelle aufweisen, die zum drahtlosen Übermitteln der Radarsensordaten, die der Sensor erfasst bzw. berechnet, an einen externen Empfänger, beispielsweise ein Mobiltelefon oder einen Server eingerichtet sein.

Gemäß einer weiteren Ausführungsform weist die Sensoranordnung weiterhin eine Befestigungseinrichtung auf, die zwischen dem ersten Abschnitt dem Behälter angeordnet ist und zum Befestigen der Sensoranordnung über den ersten Abschnitt an dem Behälter eingerichtet ist.

Mittels der Befestigungseinrichtung kann beispielsweise die Montage der Sensoranordnung durch eine Klebemontage erfolgen. Dabei kann eine Klebefläche zwischen der unteren Seite des Sensorgehäuses und dem Behälterdach vorgesehen sein. Alternativ oder zusätzlich kann die Befestigungseinrichtung eine Montageplatte aufweisen.

Alternativ oder zusätzlich kann die Befestigungseinrichtung als eine Schraubenverbindung oder eine Flanschverbindung ausgeführt sein.

Gemäß einer weiteren Ausführungsform weist die Sensoranordnung eine Absorbervorrichtung auf, die aus einem Absorbermaterial besteht und im ersten Abschnitt des Sensorgehäuses angeordnet ist.

Das Absorbermaterial kann im Inneren des Sensorgehäuses bzw. an der inneren Seitenwand des ersten Abschnitts angebracht sein, um gerade bei dem schrägen Anordnen die Störreflektionen durch die erste Reflektion durch den Kunststoffbehälter zu reduzieren. Durch das im Gehäuse angebrachte Absorbermaterial kann beispielsweise die Radarenergie des Messsignals, die vom Innenteil des Sensorgehäuses, der Klebefläche oder dem Behälterdach oder den Behälterwänden durch Störreflektion erzeugt werden kann, absorbieren oder dämpfen. Somit kann vermieden oder zumindest verhindert werden, dass Störsignale aus der Störreflektion zurück zum Radarsensor gelangen und somit die Messergebnisse beeinflussen.

Die Sensoranordnung kann zwischen dem ersten Abschnitt und dem zweiten Abschnitt bzw. an dem Übergang der ersten und zweiten Abschnitte eine Dichtung aufweisen, um den ersten Hohlraum und/oder den zweiten Hohlraum abzudichten.

Gemäß einer weiteren Ausführungsform weisen der erste Abschnitt und der zweite Abschnitt jeweils die Form eines schräg abgeschnittenen Hohlzylinders auf und sind eingerichtet, das Sensorgehäuse der Ausrichtevorrichtung einstückig und zylindrisch zu bilden. Das Sensorgehäuse weist eine schräge Fläche auf, die zwischen dem ersten Abschnitt und dem zweiten Abschnitt angeordnet ist und derart ausgebildet ist, dass über die schräge Fläche der erste Abschnitt und der zweite Abschnitt gegeneinander drehbar sind.

An der schrägen Fläche ist der erste Abschnitt mit dem zweiten Abschnitt verbunden. Die schräge Fläche kann virtuell gebildet sein, wenn der erste Hohlraum und der zweite Hohlraum einen gemeinsamen Hohlraum des Sensorgehäuses bilden. Alternativ kann die schräge Fläche als eine Drehfläche zwischen den geschlossenen Hohlräumen, nämlich dem ersten Hohlraum und dem zweiten Hohlraum, vorgesehen sein.

Die Ausrichtevorrichtung kann somit eine erste Drehachse mittels der drehbaren ersten und zweiten Abschnitte aufweisen.

Gemäß einer weiteren Ausführungsform ist die Antenne des Sensors derart ausgebildet, um in den ersten Hohlraum zu ragen.

Im Falle, dass der erste Hohlraum und der zweite Hohlraum einen gemeinsamen Hohlraum des Sensorgehäuses bilden, kann die Antenne in dem zweiten Hohlraum des zweiten Abschnitts an dem Sensorgehäuse mittig oder außermittig befestigt und auch in dem ersten Hohlraum ohne Berührung der unteren Seite des ersten Abschnitts angeordnet sein. Ist die Antenne außermittig angeordnet, kann die Antenne am kürzeren Teil des Gehäuseteils des zweiten Abschnitts angebracht sein. Somit kann der Messsensor in der unmittelbaren Nähe des Behälters angeordnet sein.

Erfindungsgemäß weist das Sensorgehäuse einen dritten Abschnitt mit einem dritten Hohlraum auf, der zwischen dem ersten Abschnitt und dem zweiten Abschnitt angeordnet ist und derart ausgebildet ist, um jeweils gegenüber dem ersten Abschnitt und/oder dem zweiten Abschnitt drehbar zu sein.

Gemäß einer weiteren Ausführungsform sind der erste Abschnitt und der dritte Abschnitt jeweils als ein schräg abgeschnittener Hohlzylinder ausgebildet und der zweite Abschnitt ist als ein Hohlzylinder ausgebildet. Der erste Abschnitt, der zweite Abschnitt und der dritte Abschnitt sind eingerichtet, das Sensorgehäuse einstückig und zylindrisch zu bilden.

Das Sensorgehäuse weist eine schräge Fläche, die zwischen dem ersten Abschnitt und dem dritten Abschnitt angeordnet ist und derart ausgebildet ist, dass über die schräge Fläche der erste Abschnitt und der dritte Abschnitt gegeneinander drehbar sind, und eine gerade Fläche, die zwischen dem zweiten Abschnitt und dem dritten Abschnitt angeordnet ist, auf.

Die Ausrichtevorrichtung der Sensoranordnung kann somit zwei Drehachsen und/oder zwei Drehflächen, nämlich die schräge Fläche und die gerade Fläche, aufweisen. Somit kann die Sensoranordnung mit höherer Flexibilität verfügen, um die die Ausrichtung des Messsignals zu ändern.

Die Ausrichtevorrichtung der Sensoranordnung kann eine Vielzahl von Drehachsen und/oder Drehflächen, beispielsweise mit kleineren Drehwinkeln, aufweisen.

Das Sensorgehäuse kann derart einstückig ausgebildet sein, dass der erste Hohlraum, der zweite Hohlraum und der dritte Hohlraum einen gemeinsamen Hohlraum bilden oder jeweils als ein geschlossener Hohlraum ausgebildet sein können. Alternativ können der erste Hohlraum und der dritte Hohlraum einen gemeinsamen Hohlraum bilden und der zweite Hohlraum, in dem die Antenne an dem Sensorgehäuse befestigt ist, kann als ein geschlossener Hohlraum ausgebildet sein.

Gemäß einer weiteren Ausführungsform ist die Antenne des Sensors in dem zweiten Hohlraum derart ausgebildet, um in den ersten Hohlraum und/oder den dritten Hohlraum zu ragen.

Das Ragen der Antenne in den ersten Hohlraum und den dritten Hohlraum kann nur erfolgen, wenn der gemeinsame Hohlraum von dem ersten Hohlraum, dem zweiten Hohlraum und dem dritten Hohlraum gebildet ist.

Gemäß einer weiteren Ausführungsform ist die Antenne derart ausgebildet ist, durch das Drehen des zweiten Abschnitts gegenüber dem dritten Abschnitt und das Drehen des dritten Abschnitts gegenüber dem ersten Abschnitt an einer höchsten Position angeordnet zu sein. Somit kann die Antenne in der unmittelbaren Nähe des Behälterdachs angeordnet sein.

Bei der schrägen Montage kann die Sensoranordnung beispielsweise über eine Klebefläche auf den Behälter angebracht. Der dritte Abschnitt des Sensorgehäuses kann derart gedreht werden, dass der zweite Abschnitt mit dem Sensor waagerecht stehen kann und sich die Antenne zum Abstrahlen des Messsignals in eine vorgegebene Richtung ausrichten kann. Beispielsweise kann der zweite Abschnitt soweit gedreht werden, bis sich die Antenne am höchsten Teil des befestigten Sensorgehäuses befinden kann.

Gemäß einer weiteren Ausführungsform ist der zweite Abschnitt von dem ersten Abschnitt und dem dritten Abschnitt trennbar ausgebildet. Das Sensorgehäuse weist eine erste Gehäuseeinheit, die durch den ersten Abschnitt und den dritten Abschnitt gebildet ist, und eine zweite Gehäuseeinheit, die durch den zweiten Abschnitt gebildet ist, auf.

Gemäß einer weiteren Ausführungsform weist die Sensoranordnung weiterhin eine zweite Befestigungseinrichtung, die zwischen der ersten Gehäuseeinheit und der zweiten Gehäuseeinheit angeordnet ist und zum Verbinden der ersten Gehäuseeinheit und der zweiten Gehäuseeinheit eingerichtet ist.

Wenn die Antenne in dem geschlossenen zweiten Hohlraum des zweiten Abschnitts oder in der zweiten Gehäuseeinheit angeordnet ist, kann die zweite Gehäuseeinheit beispielsweise mittels einer Befestigungseinrichtung, wie z. B. eines Klebebands, an der ersten Gehäuseeinheit befestigt sein. Somit kann die zweite Gehäuseeinheit mit dem darin angeordneten Sensor mit der Antenne als ein autarker Radarsensor und die zweite Gehäuseeinheit als eine separate Ausrichtevorrichtung oder ein Adapter zur Montage und zum Ausrichten des Sensors ausgeführt sein.

Gemäß einer Ausführungsform weist der erste Abschnitt die Form eines Bügels auf und der zweite Abschnitt der Ausrichtevorrichtung weist die Form eines Kugelsegments auf.

Alternative kann der erste Abschnitt in Form eines Hohlzylinders mit dem ersten Hohlraum ausgebildet sein.

Der zweite Abschnitt der Ausrichtevorrichtung kann in Form eines Hohlkugels oder eines Kugelsegments oder eines Hohlkugelsegments mit einem zweiten Hohlraum, in dem der Sensor bzw. die Antenne und/oder die Elektronik angeordnet sind, ausgebildet sein. Beispielsweise kann das Hohlkugelsegment verschlossen sein und einen geschlossenen zweiten Hohlraum aufweisen.

Bei dem Hohlkugelsegment kann es sich um eine Gelenkpfanne handeln.

Der erste Abschnitt und der zweite Abschnitt können beispielsweise mittels einer Gewindeverbindung oder einer Schnappverbindung gegeneinander drehbar verbunden sein.

Gemäß einer weiteren Ausführungsform weist die Sensoranordnung weiterhin ein Dichtungselement, das zum Abdichten des Sensorgehäuses eingerichtet ist.

Beispielsweise kann das Dichtungselement ein O-Ring-Dichtung und im Kugelbereich der Sensoranordnung angeordnet sein.

Eine Strahlablenkungseinrichtung, beispielsweise eine Linse, kann im unteren Teil des zweiten Abschnitts vorgesehen sein, um den Messstrahl oder das Messsignal beispielsweise abzulenken.

Alternativ zum hohlkugelförmigen zweiten Abschnitt kann der zweite Abschnitt in Form eines abgeflachten Kugelsegments ausgebildet sein.

Gemäß einer Ausführungsform weist der erste Abschnitt die Form eines Bügels auf und der zweite Abschnitt des Sensorgehäuses weist die Form eines abgeflachten Kugelsegments auf.

Gemäß einer Ausführungsform weist der erste Abschnitt die Form einer Auflagevorrichtung auf und der zweite Abschnitt des Sensorgehäuses die Form eines Hohlzylinders auf. Der zweite Abschnitt ist mit dem ersten Abschnitt durch eine Verbindungseinrichtung verbunden.

Die Verbindungseinrichtung kann beispielsweise eine Schraubverbindung sein. Der erste Abschnitt kann als ein Untergestell oder ein Montagebügel ausgebildet sein. Der Sensor kann somit beispielsweise über den Montagebügel mit einer Montageplatte verbunden.

Gemäß einer weiteren Ausführungsform weist die Sensorvorrichtung weiterhin einen dritten Abschnitt auf, der die Form einer Gummimanschette aufweist und zwischen dem ersten Abschnitt und dem zweiten Abschnitt angeordnet ist.

Die Gummimanschette kann einen dritten Hohlraum aufweisen und zum Verschließen und Schützen des Raums zwischen dem Sensor im zweiten Abschnitt und der Auflagevorrichtung des ersten Abschnitts eingerichtet sein.

Gemäß einer weiteren Ausführungsform weist die Sensoranordnung weiterhin einen Filter auf, der an dem ersten Abschnitt und/oder dem dritten Abschnitt der Sensorgehäuse angeordnet ist.

Der Filter kann ein Druckausgleichsfilter sein und alternativ oder zusätzlich zu der Absorbervorrichtung in dem ersten Hohlraum und/oder dem dritten Hohlraum der oben beschriebenen Ausführungsformen vorgesehen sein.

Ein weiterer Aspekt der vorliegenden Offenbarung betrifft ein Sensorgehäuse mit einer Ausrichtevorrichtung, das zur Montage und zum Ausrichten einer Sensoranordnung an einem Behälter zur Füllstand- oder Grenzstandmessung eines Füllguts oder eines Schüttguts in dem Behälter eingerichtet ist.

Ein weiterer Aspekt der vorliegenden Offenbarung betrifft die Verwendung einer Sensoranordnung zur Füllstand- oder Grenzstandmessung eines Füllguts oder eines Schüttguts in einem Behälter.

Ein weiterer Aspekt der vorliegenden Offenbarung betrifft die Verwendung eines Sensorgehäuses mit einer Ausrichtevorrichtung zur Montage und zum Ausrichten einer Sensoranordnung an einem Behälter zur Füllstand- oder Grenzstandmessung eines Füllguts oder eines Schüttguts in dem Behälter.

Im Folgenden werden weitere Ausführungsformen der vorliegenden Offenbarung unter Bezugnahme auf die Figuren beschrieben. Werden in der folgenden Figurenbeschreibung gleiche Bezugszeichen verwendet, so bezeichnen diese gleiche oder ähnliche Elemente. Die Darstellungen in den Figuren sind schematisch und nicht maßstäblich.

### KURZE BESCHREIBUNG DER FIGUREN

- Fig. 1a: zeigt eine schematische Darstellung eines Messaufbaus einer Sensoranordnung gemäß einer Ausführungsform.
- Fig. 1b: zeigt eine schematische Darstellung eines Messaufbaus einer Sensoranordnung gemäß einer Ausführungsform.
- Fig. 2: zeigt schematisch eine Seitenansicht eines Sensorgehäuses einer Sensoranordnung gemäß einer Ausführungsform.
- Fig. 3: zeigt schematisch eine Draufsicht einer Sensoranordnung gemäß einer Ausführungsform.
- Fig. 4a: zeigt eine schematische Darstellung einer Sensoranordnung gemäß einer Ausführungsform.
- Fig. 4b: zeigt eine schematische Darstellung einer Sensoranordnung gemäß einer weiteren Ausführungsform.
- Fig. 4c: zeigt eine schematische Darstellung einer Sensoranordnung gemäß einer weiteren Ausführungsform.
- Fig. 5a: zeigt eine schematische Darstellung einer Sensoranordnung gemäß einer Ausführungsform.
- Fig. 5b: zeigt eine schematische Darstellung einer Sensoranordnung gemäß einer weiteren Ausführungsform.
- Fig. 5c: zeigt eine schematische Darstellung einer Sensoranordnung gemäß einer weiteren Ausführungsform.
- Fig. 6a: zeigt eine schematische Darstellung einer Sensoranordnung gemäß einer Ausführungsform.
- Fig. 6b: zeigt eine schematische Darstellung einer Sensoranordnung gemäß einer weiteren Ausführungsform.
- Fig. 7a: zeigt eine schematische Darstellung einer Sensoranordnung gemäß einer Ausführungsform.
- Fig. 7b: zeigt eine schematische Darstellung einer Sensoranordnung gemäß einer weiteren Ausführungsform.
- Fig. 8a: zeigt eine schematische Darstellung einer Sensoranordnung gemäß einer Ausführungsform.
- Fig. 8b: zeigt eine schematische Darstellung einer Sensoranordnung gemäß einer Ausführungsform.
- Fig. 9a: zeigt eine schematische Darstellung einer Sensoranordnung gemäß einer Ausführungsform.

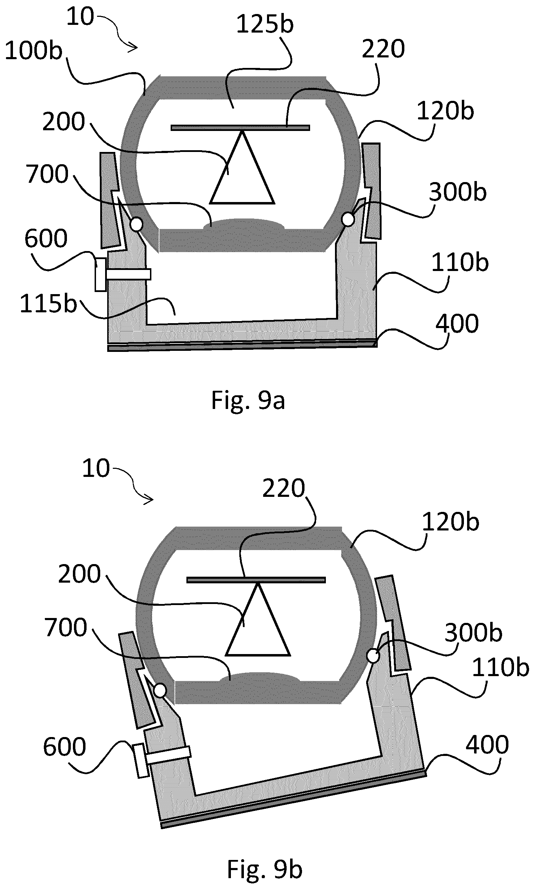

- Fig. 9a: zeigt eine schematische Darstellung einer Sensoranordnung gemäß einer weiteren Ausführungsform.

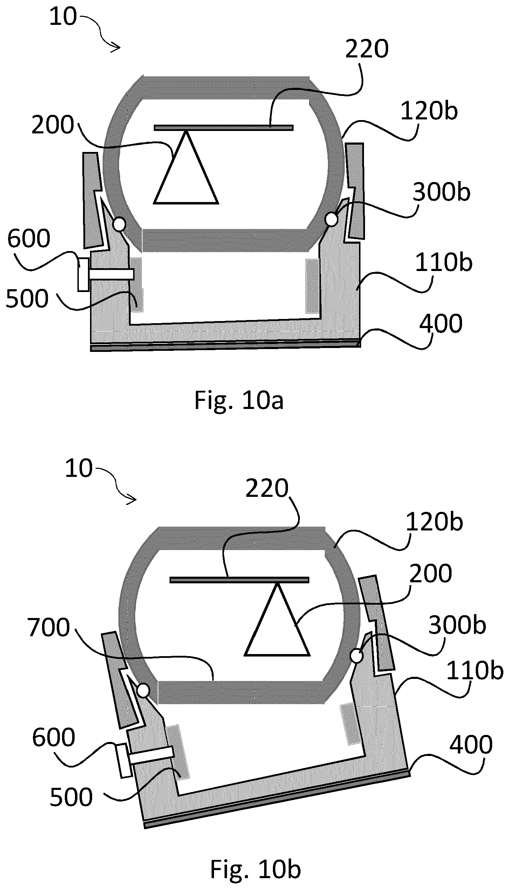

- Fig. 10a: zeigt eine schematische Darstellung einer Sensoranordnung gemäß einer Ausführungsform.
- Fig. 10b: zeigt eine schematische Darstellung einer Sensoranordnung gemäß einer weiteren Ausführungsform.

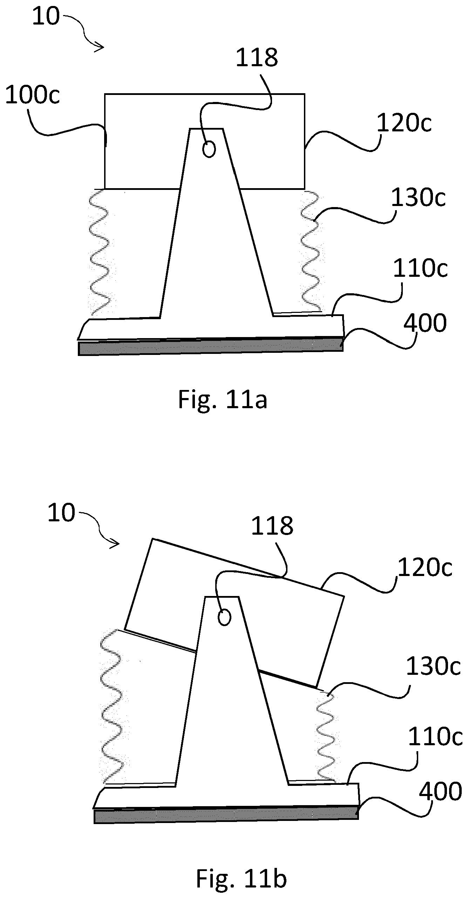

- Fig. 11a: zeigt eine schematische Darstellung einer Sensoranordnung gemäß einer Ausführungsform.
- Fig. 11b: zeigt eine schematische Darstellung einer Sensoranordnung gemäß einer weiteren Ausführungsform.

### DETAILLIERTE BESCHREIBUNG VON AUSFÜHRUNGSBEISPIELEN

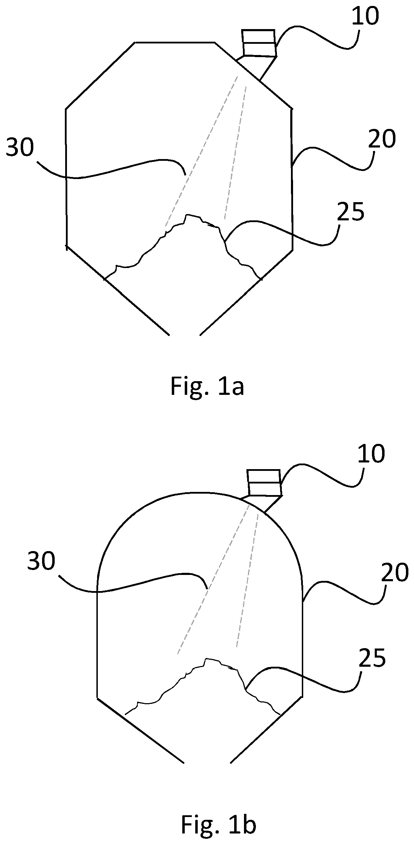

Fig. 1a zeigt schematisch einen Messaufbau einer Sensoranordnung 10 gemäß einer Ausführungsform. Die Sensoranordnung 10, die einen Sensor aufweist, ist außerhalb eines Behälters 20 bzw. an dem schrägen Behälterdach montiert oder installiert und zur Füllstand- oder Grenzstandmessung eines Füllguts oder eines Schüttguts 25 in dem Behälter eingerichtet. Die Sensoranordnung 10 ist zum Abstrahlen und empfangen eines Messsignals 30 oder eines Messstrahls durch das Behälterdach hindurch eingerichtet.

Der Behälter 20 mit dem schrägen Behälterdach kann aus einem Kunststoff oder einem GFK bestehen. Beispielsweise kann der Behälter in Fig. 1 ein GFK-Silo sein, das bei der Anwendung in einer Tierfutter-Anlage einen kegelförmigen Behälterdeckel aufweist. Alternativ zeigt Fig. 1b einen GFK-Tank als den Behälter 20 mit einem runden Behälterdeckel.

Wichtig ist, dass der Sensor bei der Montage der Sensoranordnung auf dem schrägen Behälterdach im Wesentlichen senkrecht nach unten bzw. in Richtung des Füllguts oder des Schüttguts 25 zur zuverlässigen Messung ausgerichtet sein kann.

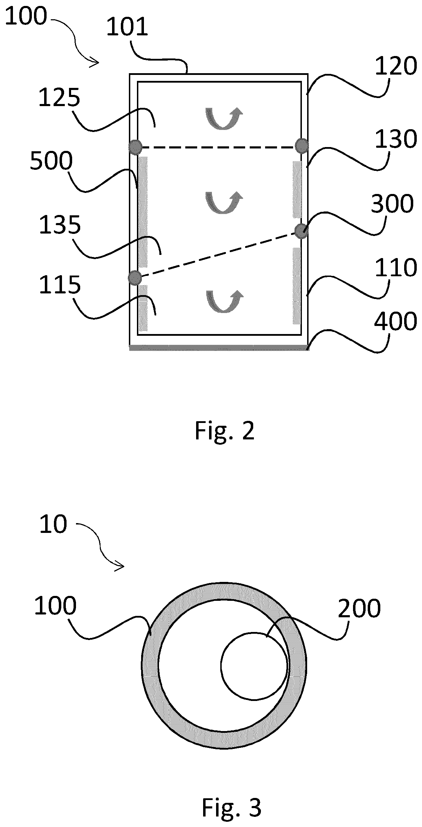

Fig. 2 zeigt ein Sensorgehäuse 100 mit einer Ausrichtevorrichtung 101, das die Sensoranordnung 10 aufweist. Die Ausrichtevorrichtung 101 des Sensorgehäuses 100 weist einen ersten Abschnitt 110, einen zweiten Abschnitt 120 und einen dritten Abschnitt 130 auf.

Der erste Abschnitt 110 weist einen ersten Hohlraum 115 auf und ist als ein unterer Teil des Sensorgehäuses angeordnet. Der zweite Abschnitt 120 weist einen zweiten Abschnitt 125 auf und ist als ein oberer Teil des Sensorgehäuses angeordnet. Der dritte Abschnitt 130 weist einen dritten Hohlraum 135 auf und ist zwischen dem ersten Abschnitt 110 und dem zweiten Abschnitt 120 angeordnet.

Der erste Abschnitt 110, der zweite Abschnitt 120 und der dritte Abschnitt 130 sind verbunden und dazu eingerichtet, das Sensorgehäuse 100 einstückig und zylindrisch zu bilden. Dabei ist der zweite Abschnitt 120 als ein Hohlzylinder ausgebildet und der ersten Abschnitt 110 und der dritte Abschnitt 130 jeweils als ein schräg abgeschnittener Hohlzylinder. Das Sensorgehäuse 100 kann vollständig geschlossen sein und/oder lässt sich nicht zerstörungsfrei öffnen.

Der dritte Abschnitt 130 ist derart ausgebildet, um jeweils gegenüber dem ersten Abschnitt 110 und/oder dem zweiten Abschnitt 120 drehbar zu sein. In anderen Worten sind die Gehäuseteile, nämlich der erste Abschnitt 110, der zweite Abschnitt 120 und der dritte Abschnitt 130, gegeneinander verdrehbar. Das Sensorgehäuse 100 weist somit zwei Drehachsen oder zwei Drehflächen auf, die eine schräge Fläche, angeordnet zwischen dem ersten Abschnitt 110 und dem dritten Abschnitt 130, und eine gerade Fläche, angeordnet zwischen dem zweiten Abschnitt 120 und dem dritten Abschnitt 130, sind.

Die Hohlräume 115, 125, 135 des Sensorgehäuses können einen gemeinsamen Hohlraum bilden oder jeweils als ein separater, geschlossener Hohlraum ausgebildet sein. Die Drehflächen des Sensorgehäuses 110 können jeweils durch die Schnittflächen oder -kanten an den Verbindungsstellen zwischen den ersten und dritten Abschnitten 110, 130 und zwischen den zweiten und dritten Abschnitten 120, 130 vorgesehen sein. Im Falle, dass der gemeinsame Hohlraum gebildet ist, können die Drehflächen virtuelle Drehflächen sein.

Ein Dichtungselement 300 kann an den Verbindungsstellen zwischen den ersten, zweiten und dritten Abschnitte 110, 120, 130 vorgesehen sein, um das Sensorgehäuse 100 abzudichten.

In den Hohlräumen können Luft oder Vakuum herrschen. Ferner kann eine Absorbervorrichtung 500, die aus einem Absorbematerial besteht, beispielsweise in dem ersten Hohlraum 115 und/oder in dem dritten Hohlraum 135 bzw. auf den Innenwänden des ersten Abschnitts 110 und des dritten Abschnitts 130 vorgesehen sein. Die Absorbervorrichtung 500 kann dazu eingerichtet sein, das Messsignal beim Durchlaufen durch die Ausrichtevorrichtung vor der Ablenkung oder der Dämpfung zu schützen, so dass die Störeinflüsse auf die Messergebnisse eliminiert oder zumindest minimiert werden können.

Der Sensor der Sensoranordnung 10 kann eine Antenne 200 aufweisen, die beispielsweise eine Hornantenne, Arrayantenne, oder Linsenantenne oder eine Parabolantenne sein kann.

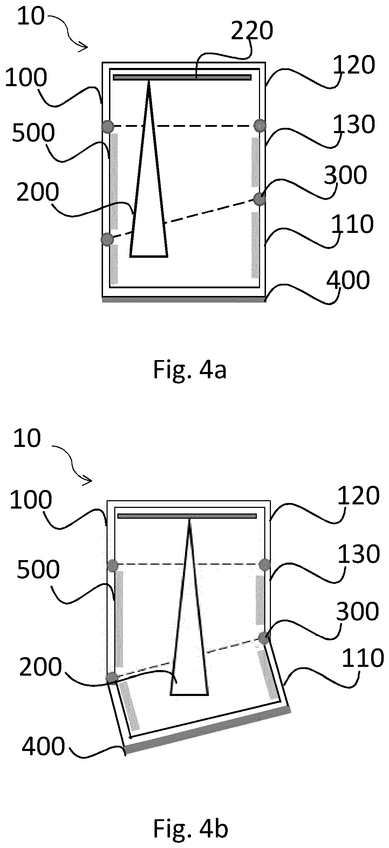

Wie in Fig. 4a-c gezeigt, ist die Antenne 200 durch den zweiten Abschnitt 120 in dem Sensorgehäuse 100 aufgenommen bzw. in dem oberen Teil des zweiten Hohlraums 125 befestigt oder angeordnet.

Ferner zeigt Fig. 3 in einer Draufsicht der Sensoranordnung 10, dass die Antenne 200 außermittig in dem Sensorgehäuse 100 angeordnet sein kann.

Die Sensoranordnung 10 in Fig. 4a-c umfasst weiterhin eine Elektronik 220 mit einer Platine, die mit der Antenne 200 verbunden und in dem oberen Teil des Sensorgehäuses bzw. in dem zweiten Abschnitt 120 angebracht und befestigt ist.

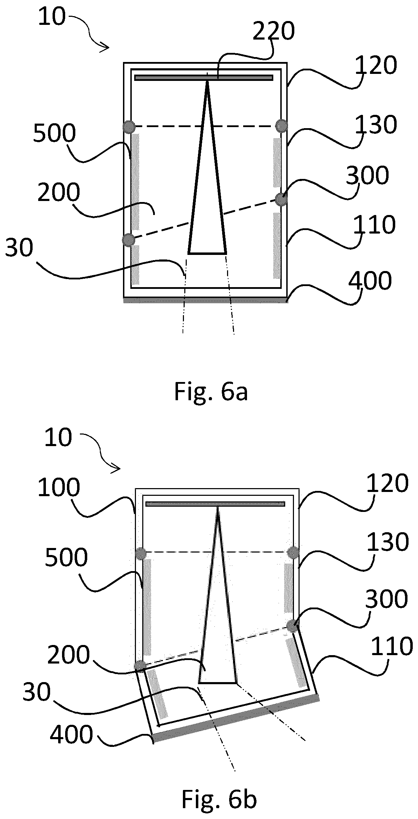

Alternativ kann die Antenne 200 mittig in dem Sensorgehäuse 100 bzw. in dem Hohlraum 125 des zweiten Abschnitts 120, wie in Fig. 6a-b gezeigt, fixiert sein. Die Antenne 200 ist derart ausgebildet, um in den ersten Hohlraum 115 und/oder den dritten Hohlraum 135 zu ragen.

Die Sensoranordnung 10 weist weiterhin eine Befestigungseinrichtung 400 auf, die am unteren Seite des Sensorgehäuses 100 vorgesehen ist. Bei der Montage der Sensoranordnung an dem schrägen Dach des Behälters 20 ist die Befestigungseinrichtung 400 zwischen dem ersten Abschnitt 110 und dem Behälter 20 angeordnet und zum Befestigen der Sensoranordnung 10 über den ersten Abschnitt 100 eingerichtet. Die Montage kann durch eine Klebemontage über eine Klebefläche erfolgen, d.h. die Befestigungseinrichtung 400 kann ein Klebemittel, wie z. B. ein Klebeband sein. Eine Klebefläche kann daher zwischen der unteren Seite des Sensorgehäuses 100 bzw. des ersten Abschnitts 110 und dem Behälterdach vorgesehen sein. Alternativ oder zusätzlich kann die Befestigungseinrichtung 400 eine Montageplatte sein.

Wenn die Sensoranordnung 10 mit der außermittig angeordneten Antenne 200 an dem Behälterdach angebracht ist, kann die Ausrichtevorrichtung 101 dazu eingerichtet sein, durch das Drehen des ersten Abschnitts 110 und/oder des zweiten Abschnitts 120 und/oder des dritten Abschnitts 130 die Abstrahlrichtung des Messsignals 30 des Sensors zu ändern.

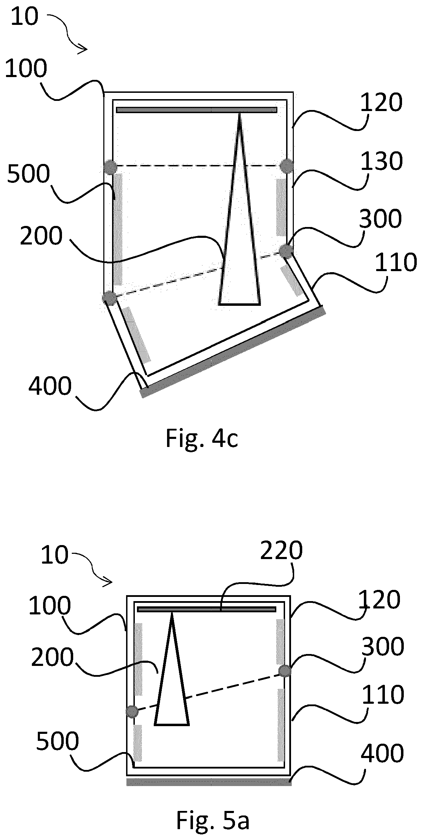

Fig. 4a zeigt, dass das Sensorgehäuse 100 beispielsweise ohne das Drehen der Abschnitte 110, 120, 130 noch zylindrisch ausgebildet ist und sich die Antenne auf der linke Seite des Sensorgehäuses 100 befindet und in eine vertikale Richtung ausrichtet. Nach dem Anbringen auf dem schrägen Behälterdach kann in Fig. 4b der dritte Abschnitt 120, beispielsweise um 90 Grad, gedreht werden, so dass der zylindrische zweite Abschnitt 120 waagerecht angeordnet sein oder ein Spitzwinkel zwischen der vertikalen Ausrichtung der Antenne 200 und dem Behälterdach gebildet werden kann. Darüber hinaus kann der zweite Abschnitt, beispielsweise um 90 Grad gedreht werden, so dass die Antenne 200, wie in Fig. 4b gezeigt, in der Mitte des zweiten Abschnitts angeordnet sein kann. Somit kann die Position der Antenne 200 in dem Sensorgehäuse 100 durch das Drehen des dritten Abschnitts 130 und/oder des zweiten Abschnitts 120 geändert werden. Im Vergleich zu Fig. 4b weist der Behälter 20 in Fig. 4c ein schrägeres Behälterdach, auf dem die Sensoranordnung 10 mittels des Befestigungseinrichtung 400 angebracht ist. Der dritte Abschnitt 130 kann weiterhin, beispielsweise um 180 Grad, gedreht werden, so dass der zweite Abschnitt 120 waagerecht angeordnet sein oder ein kleinerer Spitzwinkel zwischen der Ausrichtung der vertikalen Ausrichtung der Antenne 200 und dem Behälterdach gebildet werden kann. Der zweite Abschnitt 120 kann ferner, beispielsweise um 180 Grad gedreht werden, so dass die Antenne 200 wie in der Seitenansicht, wie in Fig. 4c gezeigt, auf der rechten Seite oder symmetrisch gegenüber der Position der Antenne, an der sich die Antenne vor dem Drehen auf der linken Seite befindet, angeordnet sein.

Durch das Drehen des zweiten Abschnitts 120 und/oder das Drehen des dritten Abschnitts 130 bei der Montage mittels des ersten Abschnitts 110 kann die Antenne 200 ausgebildet sein, so dass die Antenne 200 an einer höchsten Position auf dem Behälterdach angeordnet sein kann. Das Messsignal kann an der höchsten Position von dem Messsensor bzw. von der Antenne durch das Behälterdach hindurch abgestrahlt werden und senkrecht zu der Oberfläche des Füllguts oder in Richtung des Schüttguts abgestrahlt werden.

Mit der Sensoranordnung 10 kann der Sensor vorteilhaft eine leichte Montage an einem Prozessbehälter mit einem schrägen, beispielsweise kegelförmigen oder runden oder klöpperförmigen Behälterdeckel und eine gleichzeitig zuverlässige Messung ermöglichen.

Wie in Fig. 6a-b gezeigt, kann eine Polarisationseinrichtung zusätzlich in der Sensoranordnung 10 bzw. in dem Sensorgehäuse 30, beispielsweise in dem ersten Abschnitt 110, vorgesehen sein, die dazu eingerichtet ist, durch das Drehen des ersten Abschnitts 110, des zweiten Abschnitts 120 oder des dritten Abschnitts 130 die Polarisation des Messsignals 30 zu ändern. Alternativ oder zusätzlich kann die Polarisationseinrichtung auch zwischen dem ersten und dem zweiten Abschnitt oder zwischen dem ersten Abschnitt und dem Behälterdach vorgesehen sein. Das Vorsehen der Polarisationseinrichtung kann die Ausrichtungsänderung der Antenne 200 bzw. des Messsignals 30 in Richtung des Füllguts oder Schüttguts erleichtern und signifikant optimieren, insbesondere wenn die Antenne 200 mittig in dem zweiten Abschnitt 200 angeordnet ist und somit sich die Position oder die Höhe der Antenne durch das Drehen des zweiten Abschnitts nicht ändern lassen kann und/oder wenn das Behälterdach besonders schräg ausgestaltet ist und einer zusätzlich Verstellung der Abstrahlrichtung des Messsignals, beispielsweise als eine feine Justage, notwendig ist.

Alternativ zu dem dreiteilig ausgebildeten Sensorgehäuse der Sensoranordnung 10 in Fig. 4a-c und Fig. 6a-b ist eine Sensoranordnung 10 in Fig. 5a-c gezeigt, die ein zweiteiliges Sensorgehäuse 100 mit einer Ausrichtevorrichtung umfasst, die zwei miteinander unmittelbar verbundene Abschnitte, nämlich einen ersten Abschnitt 110 als einen unteren Teil und einen zweiten Abschnitt 120 als einen oberen Teil, aufweist. Das Sensorgehäuse 100 der Sensoranordnung 10 kann somit auf einen dritten Abschnitt als einen Zwischenteil verzichten. Somit kann die Sensoranordnung mit den zweiteiligen Abschnitten 110, 120 einen kompakten Aufbau aufweisen.

Die Sensoranordnung 10 in Fig. 5a-c weist eine einzige Drehachse oder Drehfläche an der Verbindungsstelle zwischen dem ersten Abschnitt 110 und dem zweiten Abschnitt 120 auf. Der erste Abschnitt 110 und der zweite Abschnitt 120 weisen jeweils die Form eines schräg abgeschnittenen Hohlzylinders auf und sind eingerichtet, das Sensorgehäuse 100 der einstückig und zylindrisch zu bilden. Die Drehfläche ist eine schräge Fläche, die zwischen dem ersten Abschnitt und dem zweiten Abschnitt angeordnet ist. Über die schräge Fläche kann der erste Abschnitt und der zweite Abschnitt gegeneinander gedreht werden, so dass das Sensorgehäuse 100 nicht mehr zylindrisch ausgebildet sein kann.

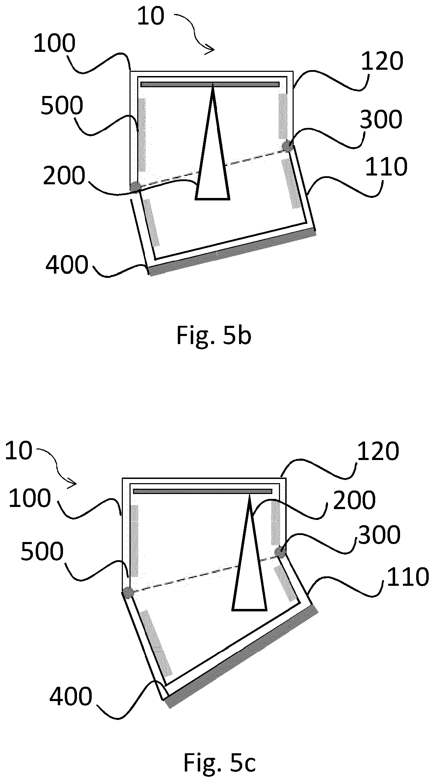

Die Ausrichtevorrichtung der Sensoranordnung ist somit dazu eingerichtet, durch die gegeneinander drehbaren ersten und zweiten Abschnitte die Abstrahlrichtung des Messsignals 30 des Sensors zu ändern. Die Antenne 200 kann auch außermittig in dem zweiten Abschnitt aufgenommen oder angeordnet sein. Darüber hinaus ist die Antenne 200 derart ausgebildet, um in den ersten Hohlraum zu ragen. In Fig. 5a ist das Sensorgehäuse 100 zylindrisch ausgebildet und die Antenne 200 in dem Sensorgehäuse beispielsweise links von der Mitte angeordnet. Bei der Montage der Sensoranordnung auf dem schrägen Behälterdach kann der zweite Abschnitt 120 mittels der Ausrichtevorrichtung gegenüber dem ersten Abschnitt 110 soweit gedreht werden, dass die Antenne in einer Seitenansicht, wie in Fig. 5b gezeigt, mittig angeordnet sein kann oder in einer weiteren Seitenansicht, wie in Fig. 5c gezeigt, rechts von der Mitte angeordnet sein kann. Es kann ein Vorteil sein, dass die Antenne 200 durch das außermittige Anordnen und das Drehen des zweiten Abschnitts am kürzeren Teil des Gehäuseteils des Sensorgehäuses angebracht werden kann.

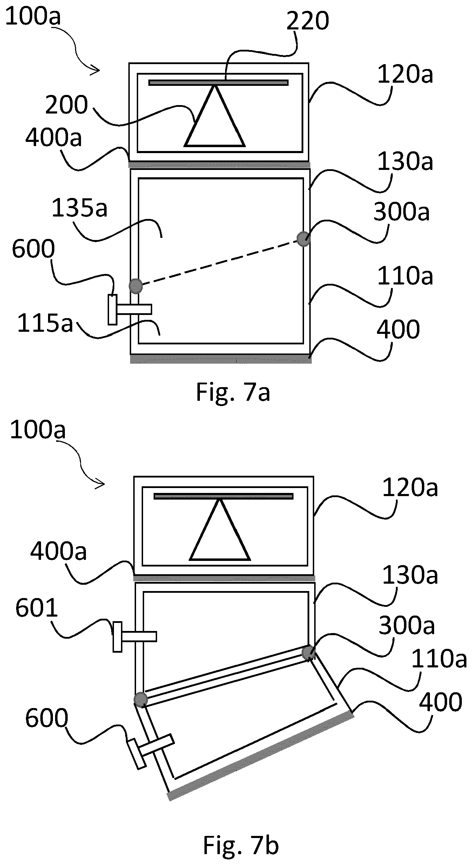

In Fig. 7a-b ist eine Sensoranordnung gemäß einer alternativen Ausführungsform zu der Sensoranordnung in Fig. 4a-c gezeigt. Die Sensoranordnung weist ein Sensorgehäuse 100a auf, das nicht einstückig ausgebildet ist, sondern zwei trennbare Gehäuseeinheiten, nämliche eine erste Gehäuseeinheit und eine zweite Gehäuseeinheit, aufweist. Die erste Gehäuseeinheit ist durch einen ersten Abschnitt 110a mit einem ersten Hohlraum 115a und einen dritten Abschnitt 130a mit deinem dritten Hohlraum 135a gebildet und kann die Form eines Hohlzylinders aufweisen, während die zweite Gehäuseeinheit durch den zweiten Abschnitt 120a als eine separate Gehäuseeinheit hohlzylindrisch gebildet ist.

Eine zweite Befestigungseinrichtung 400a ist zwischen der ersten Gehäuseeinheit und der zweiten Gehäuseeinheit vorgesehen und zum Verbinden der ersten Gehäuseeinheit und der zweiten Gehäuseeinheit eingerichtet. Die zweite Gehäuseeinheit kann beispielsweise auf der ersten Gehäuseeinheit geklebt sein.

Ein Sensor oder ein Radarsensor mit der Antenne 200 und der Platine 220 ist in der zweiten Gehäuseeinheit bzw. dem zweiten Abschnitt 120a aufgenommen oder angeordnet. Daher können die geschlossene Gehäuseeinheit mit dem darin angeordneten Sensor ein autarker Messsensor bilden.

Darüber hinaus kann die erste Gehäuseeinheit als eine separate Ausrichtevorrichtung oder als Adapter zur Montage und zum Ausrichten des Messsensors ausgeführt sein. Die getrennt ausgebildete zweite Gehäuseeinheit kann dazu führen, dass der Sensor leicht austauschbar sein kann und die zweite Gehäuseeinheit als ein Adapter universal für Sensoren unterschiedlicher Arten verwendet werden kann.

Ferner können der erste Hohlraum 115a und der dritter Hohlraum 135a einen gemeinsamen Hohlraum wie in Fig. 7a bilden und die Ausrichtevorrichtung kann somit eine virtuelle Drehfläche aufweisen. Alternativ können der erste Hohlraum 115a und der dritter Hohlraum 135a jeweils einen eigenen geschlossenen Hohlraum wie in Fig. 7b aufweisen.

Ein Filter 600 oder ein Druckausgleichsfilter kann alternativ oder zusätzlich zu der Absorbervorrichtung in dem ersten Hohlraum 115a und/oder dem dritten Hohlraum 135a der ersten Gehäuseeinheit vorgesehen sein, um den Luftdruck innerhalb und außerhalb der Gehäuseeinheit auszugleichen. Bilden der erste Hohlraum 115a und der dritte Hohlraum 135a, wie in Fig. 7a gezeigt, einen gemeinsamen Hohlraum, kann ein Filter vorgesehen sein. Weisen der erste Hohlraum 115a und der dritte Hohlraum 135a jeweils einen eigenen geschlossenen Hohlraum, wie in Fig. 7b gezeigt, kann der Filter in dem jeweiligen geschlossenen Hohlraum vorgesehen sein.

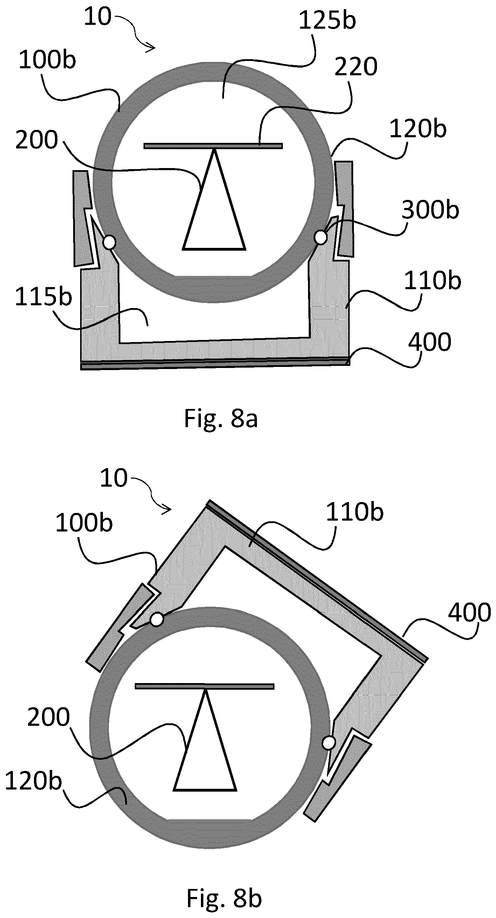

In Fig. 8a-b ist eine Sensoranordnung gemäß einer weiteren Ausführungsform gezeigt. Die Sensoranordnung umfasst einen Sensor 100, der eine Antenne 200 und eine Elektronik oder eine Platine 220 aufweist, und ein Sensorgehäuse 100b, das eine Ausrichtevorrichtung mit einem ersten Abschnitt 110b in Form eines Bügels und einem zweiten Abschnitt 120b die Form eines Hohlkugels oder eines Kugelsegments aufweist. Bei dem Hohlkugelsegment des zweiten Abschnitts 120b kann es sich um eine Gelenkpfanne handeln.

Als ein weitere Ausführungsform zu der Sensoranordnung in Fig. 8a-b weist die Sensoranordnung in Fig. 9a-b und Fig. 10a-b ein Sensorgehäuse 100b mit einem zweiten Abschnitt 120b in Form eines abgeflachten Kugelsegments auf.

Der erste Abschnitt 110b kann alternativ die Form eines Hohlzylinders und einen ersten Hohlraums 115b aufweisen. Der zweite Abschnitt 120b der Ausrichtevorrichtung bzw. des Sensorgehäuses 100b weist einen ersten Hohlraum 100b auf, in dem der Sensor bzw. die Antenne 200 und die Platine 220 aufgenommen oder angeordnet ist. Der erste Abschnitt 110b und der zweite Abschnitt 110b können beispielsweise mittels einer Gewindeverbindung oder einer Schnappverbindung miteinander verbunden und gegeneinander drehbar sein. In anderen Worten kann der Sensor in dem kugelförmigen zweiten Abschnitts 120b wie ein Kugel an dem ersten Abschnitt 110b als eine Halterung eingespannt oder angeordnet sein.

Ein Dichtungselement 300b kann an der Verbindungsstelle vorgesehen und dazu eingerichtet sein, um das Sensorgehäuse 100b abzudichten.

Eine Befestigungseinrichtung 400, wie z. B. ein Klebeband, kann bei der Montage der Sensoranordnung 10 zwischen dem ersten Abschnitt 100b und dem Behälter 20 vorgesehen und dazu eingerichtet sein, die Sensoranordnung 10 über dem ersten Abschnitt 110b an dem Behälter 20 zu befestigen. Durch die Klebemontage kann die Sensoranordnung 10 einfach an einem Behälterdach, insbesondere einem schräge Behälterdach, wie in Fig. 8a, Fig. 9a-b oder Fig. 10a-b gezeigt, derart angebracht sein, dass der erste Abschnitt 110b unterhalb des zweiten Abschnitts 120b angeordnet sein und das Messsignal durch das Sensorgehäuse 100b, die untere Seite des ersten Abschnitts 110b und die Behälterwand hindurch abgestrahlt werden kann. Durch das Drehen des ersten Abschnitts 110b und/oder des zweiten Abschnitts 120b kann die Sensoranordnung 10 wie in Fig. 8b mittels der Befestigungseinrichtung 400 außerhalb des Behälters oder in der unmittelbaren Nähe des Behälters derart vorgesehen sein, dass der erste Abschnitt 110b oberhalb des zweiten Abschnitts 120b angeordnet sein und das Messsignal durch das Sensorgehäuse 100b und die Behälterwand, aber nicht durch den ersten Abschnitt 110b, hindurch abgestrahlt werden kann. Somit kann die Installation der Sensoranordnung mit jeglicher Freiheit erfolgen. Beispielsweise kann der Sensor somit um 360 Grad drehbar und frei ausgerichtet sein.

Fig. 9a und Fig. 9b zeigen, dass die Sensoranordnung 10 weiterhin eine Strahlablenkungseinrichtung 700 aufweisen kann, die beispielsweise eine Linse und in dem unteren Teil des zweiten Abschnitts 120b vorgesehen und eingerichtet sein, das Messsignal in Richtung des Füllguts in dem Behälter abzulenken. Daher kann das Vorsehen der Strahlablenkungseinrichtung 700 dazu dienen, die Abstrahlrichtung des Messsignals des Sensors zusätzlich zu dem Drehen des ersten Abschnitts und/oder des zweiten Abschnitts mittels der Ausrichtevorrichtung zu ändern.

Zusätzlich kann ein Filter 600 bzw. ein Druckausgleichsfilter und/oder ein Absorbervorrichtung 500 in dem ersten Hohlraum 115b des ersten Abschnitts 110b vorgesehen sein.

Die Antenne 200 kann beispielsweise mittig, wie in Fig. 9a-b gezeigt, oder außermittig, wie in Fig. 10a-b gezeigt in dem dritten Abschnitt 120b angeordnet sein. Durch das außermittige Anordnen der Antenne 200 kann die Position der Antenne 200, z. B. von der linke Seite in Fig. 10a zu der rechte Seite in Fig. 10b, durch das Drehen des zweiten Abschnitts 120b gegenüber dem ersten Abschnitt 110b geändert und die Abstrahlrichtung des Messsignals weiterhin verändert werden.

In Fig. 11a-b ist eine Sensoranordnung 10 gemäß einer alternativen Ausführungsform gezeigt. Die Sensoranordnung 10 umfasst ein Sensorgehäuse 100c mit einer Ausrichtevorrichtung, die einen ersten Abschnitt 110c in Form einer Auflagevorrichtung, einen zweiten Abschnitt 120c in Form eines Hohlzylinders und einen dritten Abschnitt 130c in Form einer Gummimanschette aufweist. Der zweite Abschnitt 120c ist mit dem ersten Abschnitt 110c durch eine Verbindungseinrichtung 118, beispielsweise eine Schraubverbindung, verbunden. Der erste Abschnitt 110c kann somit als ein Untergestell oder ein Montagebügel ausgebildet sein.

Die Gummimanschette 130c ist zwischen dem ersten Abschnitt und dem Abschnitt vorgesehen und dazu eingerichtet, den Raum zwischen dem Sensor in zweiten Abschnitt 120c und der Auflagevorrichtung des ersten Abschnitts 110c zu verschließen oder als einen geschlossenen Hohlraum zu bilden, um den Hohlraum vom Eintritt fremder Teilchen aus der Umgebung zu schützen. Somit kann die Sensoranordnung 10 für die Prozessbehälter im Freien langfristig und zuverlässig eingesetzt werden.

## Patentansprüche

1. Sensoranordnung (10) zur Füllstand- oder Grenzstandmessung eines Füllguts oder eines Schüttguts (25) in einem Behälter (20), aufweisend:
einen Sensor mit einer Antenne (200);
ein Sensorgehäuse (100, 100a, 100b, 100c) mit einer Ausrichtevorrichtung (101), die einen ersten Abschnitt (110, 110a, 110b, 110c) und einen zweiten Abschnitt (120, 120a, 120b, 120c), eingerichtet zur Aufnahme der Antenne, aufweist, wobei der erste Abschnitt und der zweite Abschnitt derart ausgebildet sind, um gegeneinander drehbar zu sein;
wobei die Ausrichtevorrichtung (101) eingerichtet ist, durch das Drehen des ersten Abschnitts (110, 110a, 110b, 110c) und/oder des zweiten Abschnitts (120, 120a, 120b, 120c) die Abstrahlrichtung des Messsignals (30) des Sensors zu ändern;
wobei die Sensoranordnung (10) dazu eingerichtet ist, mittels des ersten Abschnitts (110, 110a, 110b, 110c) des Sensorgehäuses (100, 100a, 100b, 100c) an der Außenseite des Behälterdachs angebracht zu sein;
**dadurch gekennzeichnet, dass**
das Sensorgehäuse (100, 100a) einen dritten Abschnitt (130, 130a) mit einem dritten Hohlraum (135, 135a) aufweist, der zwischen dem ersten Abschnitt (110, 110a) und dem zweiten Abschnitt (120, 120a) angeordnet ist und derart ausgebildet ist, um jeweils gegenüber dem ersten Abschnitt (110, 110a) und/oder dem zweiten Abschnitt (120, 120a) drehbar zu sein.

2. Sensoranordnung (10) nach Anspruch 1,
wobei die Antenne (200) außermittig oder mittig in dem zweiten Abschnitt (120, 120a, 120b, 120c) des Sensorgehäuses (100, 100a, 100b, 100c) angeordnet ist.

3. Sensoranordnung (10) nach einem der vorhergehenden Ansprüche, weiterhin aufweisend:
eine Polarisationseinrichtung, die eingerichtet ist, durch das Drehen des ersten Abschnitts (110, 110a, 110b, 110c) und/oder des zweiten Abschnitts (120, 120a, 120b, 120c) die Polarisation des Messsignals (30) zu ändern.

4. Sensoranordnung (10) nach einem der vorhergehenden Ansprüche,
wobei das Sensorgehäuse (100, 100a, 100b, 100c) vollständig geschlossen ist und/oder sich nicht zerstörungsfrei öffnen lässt.

5. Sensoranordnung (10) nach einem der vorhergehenden Ansprüche, weiterhin aufweisend:
eine Befestigungseinrichtung (400), die zwischen dem ersten Abschnitt (110, 110a, 110b, 110c) und dem Behälter (20) angeordnet ist und zum Befestigen der Sensoranordnung (10) über den ersten Abschnitt (110, 110a, 110b, 110c) an dem Behälter (20) eingerichtet ist.

6. Sensoranordnung (10) nach einem der vorhergehenden Ansprüche, weiterhin aufweisend:
eine Absorbervorrichtung (500), die aus einem Absorbermaterial besteht und im ersten Abschnitt (110, 110a, 110b, 110c) des Sensorgehäuses (100) angeordnet ist.

7. Sensoranordnung (10) nach einem der vorhergehenden Ansprüche,
wobei der erste Abschnitt (110) und der zweite Abschnitt (120) jeweils die Form eines schräg abgeschnittenen Hohlzylinders aufweisen und eingerichtet sind, das Sensorgehäuse (100) einstückig und zylindrisch zu bilden;
wobei das Sensorgehäuse (100) der Ausrichtevorrichtung (101) eine schräge Fläche aufweist, die zwischen dem ersten Abschnitt (110) und dem zweiten Abschnitt (120) angeordnet ist und derart ausgebildet ist, dass über die schräge Fläche der erste Abschnitt und der zweite Abschnitt gegeneinander drehbar sind.

8. Sensoranordnung (10) nach einem der vorhergehenden Ansprüche,
wobei der erste Abschnitt (110, 110a, 110b, 110c) einen ersten Hohlraum (115, 115a) aufweist;
wobei der zweite Abschnitt (110, 110a, 110b, 110c) einen zweiten Hohlraum (125, 125a) aufweist, in dem die Antenne (200) angeordnet ist;
wobei die Antenne (200) des Sensors derart ausgebildet ist, um in den ersten Hohlraum (115) zu ragen.

9. Sensoranordnung (10) nach Anspruch 8,
wobei der erste Abschnitt (110, 110a) und der dritte Abschnitt (130, 130a) jeweils als ein schräg abgeschnittener Hohlzylinder ausgebildet sind und der zweite Abschnitt (120, 120a) als ein Hohlzylinder ausgebildet ist;
wobei der erste Abschnitt (110, 110a), der zweite Abschnitt (120, 120a) und der dritte Abschnitt (130, 130a) eingerichtet sind, das Sensorgehäuse (100, 100a) einstückig und zylindrisch zu bilden;
wobei das Sensorgehäuse (100, 100a) eine schräge Fläche, die zwischen dem ersten Abschnitt (110, 110a) und dem dritten Abschnitt (130, 130a) angeordnet ist und derart ausgebildet ist, dass über die schräge Fläche der erste Abschnitt und der dritte Abschnitt gegeneinander drehbar sind, und eine gerade Fläche, die zwischen dem zweiten Abschnitt (120, 120a) und dem dritten Abschnitt (130, 130a) angeordnet ist, aufweist.

10. Sensoranordnung (10) nach einem der vorhergehenden Ansprüche,
wobei die Antenne (200) des Sensors in dem zweiten Hohlraum (125, 125a) derart ausgebildet ist, um in den ersten Hohlraum (115, 115a) und/oder den dritten Hohlraum (135, 130a) zu ragen; und/oder
wobei die Antenne (200) derart ausgebildet ist, durch das Drehen des zweiten Abschnitts (120, 120a) gegenüber dem dritten Abschnitt (130, 130a) und das Drehen des dritten Abschnitts (130, 130a) gegenüber dem ersten Abschnitt (110, 110a) an einer höchsten Position angeordnet zu sein.

11. Sensoranordnung (10) nach einem der vorhergehenden Ansprüche,
wobei der zweite Abschnitt (120a) von dem ersten Abschnitt (110a) und dem dritten Abschnitt (130a) trennbar ausgebildet ist;
wobei das Sensorgehäuse (100a) eine erste Gehäuseeinheit, die durch den ersten Abschnitt (110a) und den dritten Abschnitt (130a) gebildet ist, und eine zweite Gehäuseeinheit, die durch den zweiten Abschnitt (120a) gebildet ist, aufweist.

12. Sensoranordnung (10) nach Anspruch 11, weiterhin aufweisend:
eine zweite Befestigungseinrichtung (400a), die zwischen der ersten Gehäuseeinheit und der zweiten Gehäuseeinheit angeordnet ist und zum Verbinden der ersten Gehäuseeinheit und der zweiten Gehäuseeinheit eingerichtet ist.

13. Sensoranordnung (10) nach Anspruch 1,
wobei der erste Abschnitt (110b) die Form eines Bügels aufweist und der zweite Abschnitt (120b) des Sensorgehäuses (100b) die Form eines Kugelsegments oder die Form eines abgeflachten Kugelsegments aufweist.

14. Sensoranordnung (10) nach einem der Ansprüche 1 bis 13, weiterhin aufweisend:
ein Dichtungselement (300, 300a, 300b), das zum Abdichten des Sensorgehäuses (100, 100a, 100b) eingerichtet ist.

15. Sensoranordnung (10) nach Anspruch 1,
wobei der erste Abschnitt (110c) die Form einer Auflagevorrichtung aufweist und der zweite Abschnitt (120c) des Sensorgehäuses (100c) die Form eines Hohlzylinders aufweist;
wobei der zweite Abschnitt (120c) mit dem ersten Abschnitt (110c) durch eine Verbindungseinrichtung (118) verbunden ist.

16. Sensoranordnung (10) nach Anspruch 15, weiterhin aufweisend:
einen dritten Abschnitt (130c), der die Form einer Gummimanschette aufweist und zwischen dem ersten Abschnitt (110c) und dem zweiten Abschnitt (120c) angeordnet ist.

17. Sensoranordnung (10) nach einem der vorhergehenden Ansprüche, weiterhin aufweisend:
einen Filter (600), der an dem ersten Abschnitt (110, 110a, 110b, 110c) und/oder dem dritten Abschnitt (130, 130a, 130b, 130c) der Sensorgehäuse (100, 100a, 100b, 100c) angeordnet ist.

18. Sensorgehäuse (100, 100a, 100b, 100c) mit einer Ausrichtevorrichtung (101), das zur Montage und zum Ausrichten einer Sensoranordnung (10) nach einem der Ansprüche 1 bis 17 an einem Behälter (20) zur Füllstand- oder Grenzstandmessung eines Füllguts oder eines Schüttguts (25) in dem Behälter (20) eingerichtet ist.

19. Verwendung einer Sensoranordnung (10) nach einem der Ansprüche 1 bis 17 zur Füllstand- oder Grenzstandmessung eines Füllguts oder eines Schüttguts (25) in einem Behälter (20).

## Claims

1. Sensor arrangement (10) for level measurement or limit level measurement of a filling material or a bulk material (25) in a container (20), comprising
a sensor with an antenna (200);
a sensor housing (100, 100a, 100b, 100c) having an alignment device (101) comprising a first portion (110, 110a, 110b, 110c) and a second portion (120, 120a, 120b, 120c) configured to receive the antenna, the first portion and the second portion being configured to be rotatable relative to each other;
wherein the alignment device (101) is configured to change the radiation direction of the measurement signal (30) of the sensor by rotating the first portion (110, 110a, 110b, 110c) and/or the second portion (120, 120a, 120b, 120c);
wherein the sensor arrangement (10) is configured to be attached to the outside of the container roof by means of the first portion (110, 110a, 110b, 110c) of the sensor housing (100, 100a, 100b, 100c);
**characterised in that**
the sensor housing (100, 100a) comprises a third portion (130, 130a) having a third cavity (135, 135a) arranged between the first portion (110, 110a) and the second portion (120, 120a) and configured to be rotatable relative to the first portion (110, 110a) and/or the second portion (120, 120a).

2. The sensor arrangement (10) according to claim 1,
wherein the antenna (200) is arranged off-center or centered in the second portion (120, 120a, 120b, 120c) of the sensor housing (100, 100a, 100b, 100c).

3. The sensor arrangement (10) according to one of the preceding claims, further comprising:
a polarization device configured to change the polarization of the measurement signal (30) by rotating the first portion (110, 110a, 110b, 110c) and/or the second portion (120, 120a, 120b, 120c).

4. The sensor arrangement (10) according to one of the preceding claims,
wherein the sensor housing (100, 100a, 100b, 100c) is completely closed and/or cannot be opened non-destructively.

5. The sensor arrangement (10) according to one of the preceding claims, further comprising:
a fastening device (400) arranged between the first portion (110, 110a, 110b, 110c) and the container (20) and adapted for fastening the sensor arrangement (10) to the container (20) via the first portion (110, 110a, 110b, 110c).

6. The sensor arrangement (10) according to any one of the preceding claims, further comprising:
an absorber device (500) comprising an absorber material and arranged in the first portion (110, 110a, 110b, 110c) of the sensor housing (100).

7. The sensor arrangement (10) according to any one of the preceding claims,
wherein the first portion (110) and the second portion (120) are each in the form of an obliquely cut hollow cylinder and are configured to integrally and cylindrically form the sensor housing (100);
wherein the sensor housing (100) of the alignment device (101) has an inclined surface arranged between the first portion (110) and the second portion (120) and configured such that the first portion and the second portion are rotatable relative to each other via the inclined surface.

8. The sensor arrangement (10) according to one of the preceding claims,
wherein the first portion (110, 110a, 110b, 110c) has a first cavity (115, 115a);
wherein the second portion (120, 120a, 120b, 120c) has a second cavity (125, 125a) in which the antenna (200) is arranged;
wherein the antenna (200) of the sensor is configured to protrude into the first cavity (115).

9. The sensor arrangement (10) according to claim 8,
wherein the first portion (110, 110a) and the third portion (130, 130a) are each formed as an obliquely cut hollow cylinder, and the second portion (120, 120a) is formed as a hollow cylinder;
wherein the first portion (110, 110a), the second portion (120, 120a) and the third portion (130, 130a) are configured to integrally and cylindrically form the sensor housing (100, 100a);
wherein the sensor housing (100, 100a) comprises an inclined surface arranged between the first portion (110, 110a) and the third portion (130, 130a) and configured such that the first portion and the third portion are rotatable relative to each other via the inclined surface, and a straight surface arranged between the second portion (120, 120a) and the third portion (130, 130a).

10. The sensor arrangement (10) according to any one of the preceding claims,
wherein the antenna (200) of the sensor in the second cavity (125, 125a) is configured to protrude into the first cavity (115, 115a) and/or the third cavity (135, 130a); and/or
wherein the antenna (200) is configured to be arranged at a highest position by rotating the second portion (120, 120a) relative to the third portion (130, 130a) and by rotating the third portion (130, 130a) relative to the first portion (110, 110a).

11. The sensor arrangement (10) according to any one of the preceding claims,
wherein the second portion (120a) is formed separably from the first portion (110a) and the third portion (130a);
wherein the sensor housing (100a) comprises a first housing unit formed by the first portion (110a) and the third portion (130a), and a second housing unit formed by the second portion (120a).

12. The Sensor arrangement (10) according to claim 11, further comprising:
a second fastening device (400a), which is arranged between the first housing unit and the second housing unit and configured to connect the first housing unit and the second housing unit.

13. The Sensor arrangement (10) according to claim 1,
wherein the first portion (110b) is in the form of a bracket and the second portion (120b) of the sensor housing (100b) is in the form of a spherical segment or a flattened spherical segment.

14. The sensor arrangement (10) according to any one of claims 1 to 13, further comprising:
a sealing element (300, 300a, 300b) configured to seal the sensor housing (100, 100a, 100b).

15. The sensor arrangement (10) according to claim 1,
wherein the first portion (110c) having the form of a support device and the second portion (120c) of the sensor housing (100c) is in the form of a hollow cylinder;
wherein the second portion (120c) is connected to the first portion (110c) by a connecting device (118).

16. The sensor assembly (10) according to claim 15, further comprising:
a third portion (130c), which is designed to be in the form of a rubber sleeve arranged between the first portion (110c) and the second portion (120c).

17. The sensor arrangement (10) according to any one of the preceding claims, further comprising:
a filter (600) arranged at the first portion (110, 110a, 110b, 110c) and/or the third portion (130, 130a, 130b, 130c) of the sensor housings (100, 100a, 100b, 100c).

18. Sensor housing (100, 100a, 100b, 100c) with an alignment device (101), configured to mount and align a sensor arrangement (10) according to any one of claims 1 to 17 on a container (20) for level measurement or limit level measurement of a filling material or a bulk material (25) in the container (20).

19. Use of a sensor arrangement (10) according to any one of claims 1 to 17 for level measurement or limit level measurement of a filling material or a bulk material (25) in a container (20).

## Revendications

1. Ensemble capteur (10) pour mesurer un niveau de remplissage ou un niveau de seuil d'un matériau de remplissage ou d'un matériau en vrac (25) dans un contenant (20), comportant :
un capteur avec une antenne (200) ;
un boîtier de capteur (100, 100a, 100b, 100c) ayant un dispositif d'alignement (101) qui comporte une première partie (110, 110a, 110b, 110c) et une deuxième partie (120, 120a, 120b, 120c) configurées pour recevoir l'antenne, dans lequel la première partie et la deuxième partie sont configurées pour être rotatives l'une par rapport à l'autre ;
dans lequel le dispositif d'alignement (101) est configuré pour changer la direction d'émission du signal de mesure (30) du capteur en faisant tourner la première partie (110, 110a, 110b, 110c) et/ou la deuxième partie (120, 120a, 120b, 120c) du capteur ;
dans lequel l'ensemble capteur (10) est configuré pour être rapporté sur le côté extérieur du sommet de conteneur au moyen de la première partie (110, 110a, 110b, 110c) du boîtier de capteur (100, 100a, 100b, 100c) ;
**caractérisé en ce que**
le boîtier du capteur (100, 100a) comporte une troisième partie (130, 130a) avec une troisième cavité (135, 135a) qui est disposée entre la première partie (110, 110a) et la deuxième partie (120, 120a) et qui est configurée pour être rotative par rapport à la première partie (110, 110a) et/ou à la deuxième partie (120, 120a) respectivement.

2. Ensemble capteur (10) selon la revendication 1,
dans lequel l'antenne (200) est disposée de manière excentrée ou centrée dans la deuxième partie (120, 120a, 120b, 120c) du boîtier de capteur (100, 100a, 100b, 100c).

3. Ensemble capteur (10) selon l'une des revendications précédentes, comportant en outre :
un dispositif de polarisation qui est configuré pour changer la polarisation du signal de mesure (30) en faisant tourner la première partie (110, 110a, 110b, 110c) et/ou la deuxième partie (120, 120a, 120b, 120c).

4. Ensemble capteur (10) selon l'une des revendications précédentes,
dans lequel le boîtier du capteur (100, 100a, 100b, 100c) est entièrement fermé et/ou ne peut pas être ouvert de manière non destructive.

5. Ensemble capteur (10) selon l'une des revendications précédentes, comportant en outre :
un dispositif de fixation (400) qui est disposé entre la première partie (110, 110a, 110b, 110c) et le contenant (20) et est configuré pour fixer l'ensemble capteur (10) sur le contenant (20) par l'intermédiaire de la première partie (110, 110a, 110b, 110c).

6. Ensemble capteur (10) selon l'une des revendications précédentes, comportant en outre :
un dispositif d'absorption (500) qui est constitué d'un matériau absorbant et est disposé dans la première partie (110, 110a, 110b, 110c) du boîtier de capteur (100).

7. Ensemble capteur (10) selon l'une des revendications précédentes,
dans lequel la première partie (110) et la deuxième partie (120) ont respectivement la forme d'un cylindre creux coupé en oblique et sont configurées pour former le boîtier de capteur (100) d'un seul tenant et de façon cylindrique ;
dans lequel le boîtier du capteur (100) du dispositif d'alignement (101) a une surface oblique qui est disposée entre la première partie (110) et la deuxième partie (120) et qui est configurée de telle sorte que la première partie et la deuxième partie sont rotatives l'une par rapport l'autre par l'intermédiaire de la surface oblique.

8. Ensemble capteur (10) selon l'une des revendications précédentes,
dans lequel la première partie (110, 110a, 110b, 110c) comporte une première cavité (115, 115a) ;
dans lequel la deuxième partie (110, 110a, 110b, 110c) comporte une deuxième cavité (125, 125a) dans laquelle l'antenne (200) est disposée ;
dans lequel l'antenne (200) du capteur est configurée de manière à faire saillie dans la première cavité (115).

9. Ensemble capteur (10) selon la revendication 8,
dans lequel la première partie (110, 110a) et la troisième partie (130, 130a) sont respectivement configurées comme un cylindre creux coupé en oblique et la deuxième partie (120, 120a) est configurée comme un cylindre creux ;
dans lequel la première partie (110, 110a), la deuxième partie (120, 120a) et la troisième partie (130, 130a) sont configurées pour former le boîtier de capteur (100, 100a) d'un seul tenant et de façon cylindrique ;
dans lequel le boîtier de capteur (100, 100a) comporte une surface oblique qui est disposée entre la première partie (110, 110a) et la troisième partie (130, 130a) et est configurée de telle sorte que la première partie et la troisième partie sont rotatives l'une par rapport à l'autre par l'intermédiaire de la surface oblique, et une surface droite qui est disposée entre la deuxième partie (120, 120a) et la troisième partie (130, 130a).

10. Ensemble capteur (10) selon l'une des revendications précédentes,
dans lequel l'antenne (200) du capteur est formé dans la deuxième cavité (125, 125a) de manière à faire saillie dans la première cavité (115, 115a) et/ou la troisième cavité (135, 130a) ; et/ou
dans lequel l'antenne (200) est configurée de manière à être disposée dans une position la plus élevée en faisant tourner la deuxième partie (120, 120a) par rapport à la troisième partie (130, 130a) et en faisant tourner la troisième partie (130, 130a) par rapport à la première partie (110, 110a).

11. Ensemble capteur (10) selon l'une des revendications précédentes,
dans lequel la deuxième partie (120a) est formée de façon à être séparable de la première partie (110a) et de la troisième partie (130a) ;
dans lequel le boîtier de capteur (100a) comporte une première unité de boîtier qui est formée par la première partie (110a) et la troisième partie (130a), et une seconde unité de boîtier qui est formée par la deuxième partie (120a).

12. Ensemble capteur (10) selon la revendication 11, comportant en outre :
un second dispositif de fixation (400a) qui est disposé entre la première unité de boîtier et la seconde unité de boîtier et qui est configuré pour relier la première unité de boîtier et la seconde unité de boîtier.

13. Ensemble capteur (10) selon la revendication 1,
dans lequel la première partie (110b) a la forme d'un étrier et la deuxième partie (120b) du boîtier du capteur (100b) a la forme d'un segment sphérique ou la forme d'un segment sphérique aplati.

14. Ensemble capteur (10) selon l'une des revendications 1 à 13, comportant en outre :
un élément d'étanchéité (300, 300a, 300b) qui est configuré pour rendre le boîtier de capteur (100, 100a, 100b) étanche.

15. Ensemble capteur (10) selon la revendication 1,
dans lequel la première partie (110c) a la forme d'un dispositif de support et la deuxième partie (120c) du boîtier de capteur (100c) a la forme d'un cylindre creux ;
dans lequel la deuxième partie (120c) est reliée à la première partie (110c) par un moyen de liaison (118).

16. Ensemble capteur (10) selon la revendication 15, comportant en outre :
une troisième partie (130c) qui a la forme d'un manchon en caoutchouc et est disposée entre la première partie (110c) et la deuxième partie (120c).

17. Ensemble capteur (10) selon l'une des revendications précédentes, comportant en outre :
un filtre (600) qui est disposé sur la première partie (110, 110a, 110b, 110c) et/ou la troisième partie (130, 130a, 130b, 130c) des boîtiers de capteur (100, 100a, 100b, 100c).

18. Boîtier de capteur (100, 100a, 100b, 100c) comportant un dispositif d'alignement (101) qui est configuré pour monter et pour aligner un ensemble capteur (10) selon l'une des revendications 1 à 17 sur un contenant (20) afin de mesurer un niveau de remplissage ou un niveau de seuil d'un matériau de remplissage ou d'un matériau en vrac (25) dans le contenant (20).

19. Utilisation d'un ensemble capteur (10) selon l'une des revendications 1 à 17 pour mesurer un niveau de remplissage ou un niveau de seuil d'un matériau de remplissage ou d'un matériau en vrac (25) dans un contenant (20).
